# NEUE EUROPÄISCHE PATENTSCHRIFT

(11) **EP 0 585 659 B2**
(45) Veröffentlichungstag und Bekanntmachung des Hinweises auf die Entscheidung über den Einspruch: **14.03.2007**
(45) Hinweis auf die Patenterteilung: 18.02.1998
(21) Anmeldenummer: 93112698.1
(22) Anmeldetag: 07.08.1993
(51) Int. Cl.: C09B 67/26, C09B 35/215, C09B 35/029, C09D 11/00

(54) **Verwendung von flüssigen Farbstoffpräparationen, enthaltend einen Disazofarbstoff, im Ink-Jet-Verfahren**
Use of liquid dyestuff preparations containing a disazo dyestuff for the ink-jet process
Utilisation de préparations liquides de colorants contenant un colorant disazoique pour le procédé par jet d'encre

(30) Priorität: 20.08.1992 DE 4227591
(43) Veröffentlichungstag der Anmeldung: 09.03.1994
(73) Patentinhaber: BASF Aktiengesellschaft, 67063 Ludwigshafen (DE)
(72) Erfinder: Bermes, Rudolf, Dr., D-6700 Ludwigshafen (DE); Dyllick-Brenzinger, Rainer, Dr., D-6940 Weinheim (DE); Beck, Karin Heidrun, Dr., D-6700 Ludwigshafen (DE)
(74) Vertreter: Riedl, Peter

(56) Entgegenhaltungen:
- EP-A- 0 013 750
- EP-A- 0 035 152
- EP-A- 0 270 003
- EP-A- 0 352 229
- DE-A- 3 445 225
- JP-A- 168 166
- US-A- 2 489 463
- US-A- 4 118 182
- JP-A-4-168166 in englischer Übersetzung
- Technische Information "Color" der BASF "Flüssige Basacid Farbstoffe", März 1990, Seiten 2,3, 6-1

## Beschreibung

Die vorliegende Erfindung betrifft die Verwendung von Farbstoffpräparationen, die 0,1 bis 10 Gew.-%, bezogen auf das Gewicht der Präparation an Farbstoff, wobei 95 bis 100 Gew.-% der Farbstoffmenge aus dem Farbstoff der Formel I 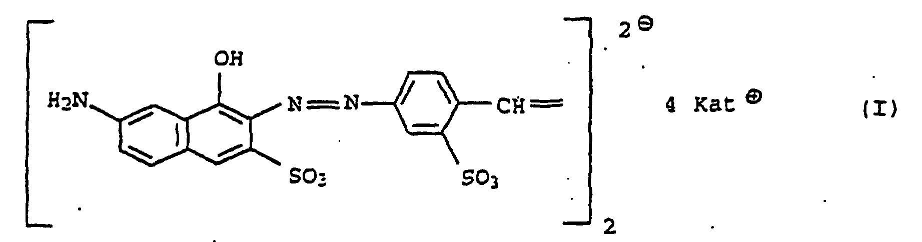 bestehen, in der Kat^{⊕} das Äquivalent eines Metall- oder Ammoniumions bedeutet, 0 bis 15 Gew.-%, bezogen auf das Gewicht der Präparation, eines oder mehrerer mit Wasser mischbarer organischer Lösungsmittel sowie 75 bis 99,99 Gew.-%, bezogen auf das Gewicht der Präparation, an Wasser enthalten und die im wesentlichen frei sind von Fremdsalzen, im Ink-Jet-Verfahren sowie ein Verfahren zum Bedrucken eines Substrats mittels des Ink-Jet-Verfahren unter Verwendung der genannten Farbstoffpräparationen.

Das Ink-Jet-Verfahren ist an sich bekannt. Dabei werden Tröpfchen einer Schreibflüssigkeit (Tinte) aus einer oder mehreren kleinen Düsen gezielt auf einen Träger, z.B. auf Papier, Holz, Textilien, Kunststoff oder Metall, geschossen. Durch elektronische Aussteuerung werden die einzelnen Tröpfchen zu Schriftzeichen oder graphischen Mustern zusammengefaßt.

Aus der US-A-4 118 182 sind wäßrige Farbstofflösungen bekannt, die neben dem Farbstoff der Formel I, dessen Diazokomponente 4,4'-Diaminostilben-2,2'-disulfonsäure (Flavonsäure) und dessen Kupplungskomponente 1-Hydroxy-7-aminonaphthalin-3-sulfonsäure (γ-Säure) ist, gleichzeitig noch einen Farbstoff mit identischer Diazokomponente aber mit 1-Hydroxy-8-aminonaphthalin-3,6-disulfonsäure (H-Säure) als Kupplungskomponente aufweisen. Da die Synthese dort durch Mischkupplung erfolgt, ist als dritter Farbstoff zusätzlich ein Produkt enthalten, das als Kupplungskomponente sowohl γ-Säure als auch H-Säure aufweist.

In der EP-A-13 750 und der EP-A-270 003 werden weiterhin Syntheselösungen beschrieben, die den Farbstoff der Formel I enthalten.

Die wäßrige Reaktionslösung, die in der EP-A-13 750 beschrieben ist, weist einen hohen Fremdsalzanteil auf und wird mit einem weiteren Diazoniumsalz zu einem Polyazofarbstoff umgesetzt.

Die Reaktionslösung, die in der EP-A-270 003 beschrieben ist, muß anschließend noch gemäß der dort gegebenen Lehre mit einem gelben Farbstoff versetzt werden, um so zu einer vollwertigen flüssigen Schwarzmischung zu gelangen.

Ferner ist aus der JP 4-168166 eine Tintenzusammensetzung für den Ink-jet-Druck bekannt, die unter anderen einen Farbstoff der Formel I enthält.

Aufgabe der vorliegenden Erfindung war es, flüssige Farbstoffpräparationen bereitzustellen, die sich vorteilhaft im Ink-Jet-Verfahren eignen und dabei über günstige anwendungstechnische Eigenschaften, insbesondere über eine gute Lichtechtheit, Wasserechtheit und Abriebechtheit verfügen.

Demgemäß wurde gefunden, daß sich die eingangs näher bezeichneten Farbstoffpräparationen vorteilhaft im Ink-Jet-Verfahren eignen.

Das Bedrucken eines Substrats mit einer Tinte unter Anwendung des Ink-Jet-Verfahrens gelingt vorteilhaft, wenn man als Tinte eine der eingangs näher bezeichneten Farbstoffpräparationen verwend.

Wie oben bereits ausgeführt, besteht der Farbstoff im wesentlichen, d.h. zu 95 bis 100 Gew.-%, jeweils bezogen auf die Farbstoffmenge, aus dem Farbstoff der Formel I.

Zusätzlich können noch 0 bis 10 Gew.-%, vorzugsweise 0 bis 5 Gew.-%, jeweils bezogen auf die Farbstoffmenge, eines oder mehrerer Nuancierfarbstoffe, z.B. C.I. Acid Yellow 23 (19 140), C.I. Acid Blue 9 (42 090), C.I. Direct Red 254, C.I. Direct Blue 86 (74 180), C.I. Reactive Red 24, C.I. Reactive Blue 49, C.I. Reactive Red 72 oder die Farbsäure des Umsetzungsproduktes von tetrazotierter Flavonsäure mit l-Amino-8-hydroxynaphthalin-3,6-disulfonsäure oder 2-Hydroxy-3-methylbenzoesäure jeweils im Molverhältnis 1:2, vorhanden sein.

Kat^{⊕} in Formel I ist das Äquivalent eines Kations und leitet sich von Metall- oder Ammoniumionen ab. Metallionen sind insbesondere die Lithium-, Natrium-, Kalium-, Magnesium- oder Calciumionen. Ammoniumionen sind entweder unsubstituierte oder substituierte Ammoniumkationen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch Hydroxy substituiert und/oder durch 1 oder 2 Sauerstoffatome in Etherfunktion unterbrochen sein kann.

Insbesondere sind Lithium-, Natrium- oder Kaliumionen zu nennen, wobei Lithium- oder Natriumionen besonders hervorzuheben sind.

Die zur Anwendung kommenden, mit Wasser mischbaren organischen Lösungsmittel sind z.B. C₁-C₄-Alkanole, wie Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Lactame, wie ε-caprolactam oder N-Methylpyrrolidin-2-on, Harnstoff, cyclische Harnstoffe, wie 1,3-Dimethylimidazolidin-2-on oder 1,3-Dimethylhexahydropyrimid-2-on, Ketone oder Ketoalkohole, wie Aceton, Methylethylketon oder 2-Methyl-2-hydroxypentan-4-on, Ether, wie Tetrahydrofuran oder Dioxan, Mono-, Oligo- oder Polyalkylenglykole oder -thioglykole, die C₂-C₆-Alkyleneinheiten aufweisen, wie Ethylenglykol, 1,2- oder 1,3-Propylenglykol, 1,2- oder 1,4-Butylenglykol, 1,6-Hexylenglykol, Diethylenglykol, Triethylenglykol, Dipropylenglykol, Thiodiglykol, Polyethylenglykol oder Polypropylenglykol, andere Polyole, wie Glycerin oder Hexan-1,2,6-triol, C₁-C₄-Alkylether von mehrwertigen Alkoholen, wie Ethylenglykolmonomethyl- oder -monoethylether, Diethylenglykolmonomethyl- oder -monoethylether oder Triethylenglykolmonomethyl- oder -monoethylether, γ-Butyrolacton oder Dimethylsulfoxid.

Mit Wasser mischbare organische Lösungsmittel, die bevorzugt sind, sind beispielsweise N-Methylpyrrolidin-2-on, Mono-, Di- oder Trialkylenglykole, die C₂-C₆-Alkyleneinheiten aufweisen, insbesondere Mono-, Di- oder Triethylenglykol oder Dipropylenglykol, oder Dimethylsulfoxid. Ganz besonders hervorzuheben sind N-Methylpyrrolidin-2-on, Diethylenglykol oder Dimethylsulfoxid.

Die erfindungsgemäß anwendbaren Farbstoffpräparationen enthalten 0,01 bis 10 Gew.-%, vorzugsweise 0,1 bis 5 Gew.-% und insbesondere 2 bis 4 Gew.-%, jeweils bezogen auf das Gewicht der Präparation, an Farbstoff.

Weiterhin enthalten die Farbstoffpräparationen 0 bis 15 Gew.-%, vorzugsweise 5 bis 15 Gew.-% und insbesondere 5 bis 10 Gew.-%, jeweils bezogen auf das Gewicht der Präparation, eines oder mehrerer mit Wasser mischbarer organischer Lösungsmittel.

Weiterhin enthalten die Farbstoffpräparationen 75 bis 99,99 Gew.-%, vorzugsweise 80 bis 94,9 Gew.-% und insbesondere 86 bis 93 Gew.-%, jeweils bezogen auf das Gewicht der Präparation, an Wasser.

Weitere Bestandteile der erfindungsgemäß anwendbaren Farbstoffpräparationen können z.B. Hilfsmittel, wie anionische, kationische oder nichtionische Tenside, Leitsalze, Fungizide, Korrosionsinhibitoren oder Parfümöle sein. Der Anteil dieser Komponenten liegt in der Regel bei 0 bis 10 Gew.-%, vorzugsweise 0 bis 5 Gew.-%, jeweils bezogen auf das Gewicht der Präparation.

Die erfindungsgemäß zur Anwendung kommenden Farbstoffpräparationen sollen im wesentlichen frei sein von Fremdsalzen. Dies bedeutet im erfindungsgemäßen Sinn, daß sie gegebenenfalls noch untergeordnete Mengen, beispielsweise 0 bis 10 Gew.-%, vorzugsweise 0 bis 5 Gew.-% und insbesondere ca. 0 Gew.-%, jeweils bezogen auf das Gewicht der Präparation, an Fremdsalzen enthalten.

Unter Fremdsalzen sind in diesem Zusammenhang in der Regel solche Salze zu verstehen, die bei der Synthese (Azokupplung) der Farbstoffe der Formel I anfallen können, z.B. Natrium- oder Kaliumchlorid oder Natrium- oder Kaliumsulfat.

Die erfindungsgemäß anwendbaren Farbstoffpräparationen können z.B. erhalten werden, indem man den Farbstoff der Formel Ia 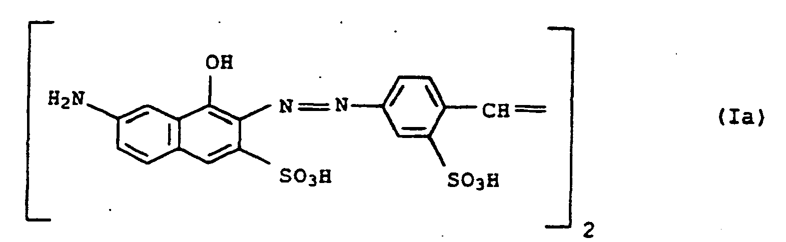 mit den dem Kation Kat^{⊕} zugrundeliegenden Basen, z.B. den entsprechenden Alkali- oder Erdalkalihydroxiden, Erdalkalioxiden, Ammoniak oder den entsprechenden Aminen, neutralisiert und mit einem oder mehreren mit Wasser mischbaren organischen Lösungsmitteln, Wasser und gegebenenfalls Hilfsmitteln in den oben aufgeführten Verhältnissen mischt.

Eine weitere Möglichkeit der Herstellung besteht z.B. darin, daß man zunächst den Farbstoff der Formel I, beispielsweise wie in der EP-A-13 570 beschrieben (mit Kat^{⊕} - Na), herstellt und ihn aus der Reaktionslösung auskristallisieren läßt. Dieser Farbstoff kann dann, wie bei der freien Säure beschrieben, für die Herstellung der Präparation verwendet werden.

Es ist auch möglich, eine Reaktionslösung, die praktisch frei ist von Fremdsalzen, wie sie beispielsweise gemäß der EP-A-270 003 durch Diazotierung mit Salpetrigsäureestern erhalten wird, gegebenenfalls nach Zugabe weiterer obengenannter Stoffe, der erfindungsgemäßen Anwendung zuzuführen.

Der Farbstoff der Formel Ia in reiner Form kann, wie oben bereits ausgeführt, zur Herstellung der erfindungsgemäß anwendbaren Farbstoffpräparationen dienen.

Er kann z.B. vorteilhaft erhalten werden, wenn man 4,4'-Diaminostilben-2,2'-disulfonsäure der Formel II 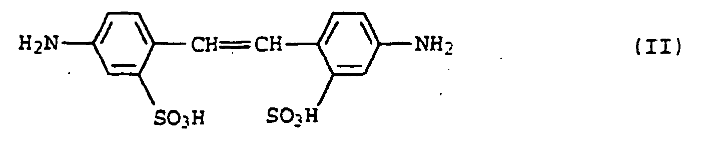 auf an sich bekannte Weise diazotiert und mit 1-Hydroxy-7-aminonaphthalin-3-sulfonsäure (γ-Säure) der Formel III 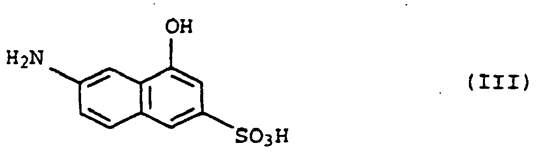 in alkalischem Milieu kuppelt. Nach Beendigung der Kupplungsreaktion kann man das Reaktionsgemisch mit Salzsäure ansäuern, wobei der Farbstoff der Formel Ia als Niederschlag ausfällt. Dieser kann abgetrennt, gewaschen und getrocknet werden.

Weiterhin eignen sich die erfindungsgemäßen Farbstoffpräparationen als Markierflüssigkeit in Schreibgeräten oder als Basis für Beschichtungsmassen, z.B. Holzbeizen, Druckfarben, Farbbandfarben, Stempelfarben oder Kugelschreiberpasten. Sie sind auch geeignet, Papier in der Masse zu färben.

Die erfindungsgemäßen Präparationen verfügen über vorteilhafte anwendungstechnische Eigenschaften, z.B. über günstige Wasserechtheit, Lichtechtheit und Abriebechtheit.

Die folgenden Beispiele sollen die Erfindung näher erläutern.

### Herstellung der Farbsäure

### Beispiel 1

In 350 ml Wasser löste man nacheinander bei Raumtemperatur 16 g 50 gew.-%ige Natronlauge, 37 g 4,4'-Diaminostilben-2,2'-disulfonsäure und 14 g Natriumnitrit auf. Diese Lösung ließ man unter gutem Rühren in eine Mischung aus 100 ml Wasser, 200 g Eis und 108 g 5N Salzsäure einlaufen. Der geringe Überschuß an salpetriger Säure wurde nach einstündigem Rühren bei 5 bis 10°C durch den Zusatz von wenig Amidosulfonsäure zerstört.

In einem zweiten Reaktionsgefäß bereitete man eine Lösung von 47,9 g 1-Hydroxy-7-aminonaphthalin-3-sulfonsäure und 92,5 g Natriumhydrogencarbonat in 350 ml Wasser, zu der man die Suspension des obigen Diazoniumsalzes so langsam laufen ließ, daß der pH-Wert des Ansatzes nicht unter 7,5 sank. Nach dem Ende der Kupplungsreaktion säuerte man mit 238 g 5N Salzsäure bis zu einem pH-Wert von 0,5 an, saugte ab und wusch mit 500 ml 0,5 gew.-%iger Salzsäure nach. Der Nutschkuchen lieferte beim Trocknen 92 g des Farbstoffes der Formel

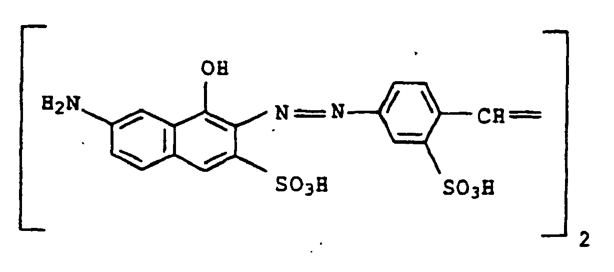

Allgemeine Herstellvorschrift für eine Farbstoffpräparation aus der Farbsäure gemäß Beispiel 1 sowie anwendungstechnische Prüfmethode:
2 bis 5 Gew.-Teile der pulverförmigen Farbsäure werden in 95 bis 98 Gew.-Teilen einer Flüssigkeit unter Zugabe von Lithiumhydroxid (bis zu einem pH-Wert von 5 bis 10) gelöst.

Die Lösung wird unter Druck durch ein Teflon-Filter der Porengröße 1 µm filtriert und danach unter vermindertem Druck entgast.

Mit dieser Aufzeichnungsflüssigkeit wird das Aufnahmegefäß eines Tintenstrahl-Druckkopfes gefüllt, der unter dem Einfluß von zugeführter Wärme die Tinte tröpfchenförmig auswirft.

Mit den erhaltenen Drucken werden Wasserechtheit, Lichtechtheit und Markerechtheit geprüft.

Die Auswertung der Untersuchungen erfolgte durch farbmetrische Messungen unter Verwendung des CIELAB-Systems. Dabei dient L* als Maß für die Helligkeit der Farbe. L* läuft von 0 (für Schwarz) bis 100 (für Weiß). Die ΔL*-Werte dienen als Maß für die Echtheiten. Ein kleiner ΔL*-Wert bedeutet, daß sich der Druck unter den Prüfbedingungen kaum verändert.

In den folgenden Beispielen betrug die Farbsäurekonzentration jeweils 3 Gew.-%. Als Flüssigkeit diente in den Beispielen 2 bis 4 ein Gemisch aus N-Methylpyrrolidin-2-on (NMP) und Wasser (1:9 v/v) und in Beispiel 5 ein Gemisch aus Formamid und Wasser (1:9 v/v).

| Bsp. Nr. | pH-Wert | L* | ΔL* (nach Test auf Wasserechtheit) | ΔL* (nach Test auf Lichtechtheit) | |
|---|---|---|---|---|---|
| | | | | 4h | 8h |
| 2 | 6 | 28,6 | 2,1 | | |
| 3 | 7 | 27,4 | 2,3 | | |
| 4 | 8 | 27,3 | 2,5 | | |
| 5 | 8 | 31,8 | 2,0 | -0,1 | 0,8 |

Farbstoffpräparationen mit ähnlichen Eigenschaften erhält man, wenn man anstelle von Lithiumhydroxid, Natriumhydroxid, Kaliumhydroxid, Calciumoxid, Magnesiumoxid, Tridecylamin, 3-(2-Ethylhexyl)propylamin, Ethanolamin oder Diethanolamin zur Einstellung des pH-Wertes benutzt.

Folgende Beispiele verdeutlichen den Einfluß der Farbstoffkonzentration:

Als Flüssigkeit diente in allen Fällen ein Gemisch aus NMP und Wasser (1:9 v/v). Der pH-Wert wurde mit Lithiumhydroxid auf 8 eingestellt.

| Bsp. | Farbsäure-Konz. [Gew.-%] | L* | ΔL* (nach Test auf Wasserechtheit) | ΔL* (nach Test auf Lichtechtheit) | |
|---|---|---|---|---|---|
| | | | | 4h | 8h |
| 6 | 2 | 30,8 | 2,8 | 1,3 | 1,9 |
| 7 | 3 | 27,3 | 3,3 | 0,8 | 1,6 |
| 8 | 4 | 27,0 | 2,2 | -0,1 | 0,7 |

Folgende Versuche verdeutlichen die Wirkung von Tensiden.

3 Gew.-Teile der Farbsäure aus Beispiel 1 werden mit 97 Gew.-Teilen einer Mischung aus NMP und Wasser (1:9 v/v) versetzt. Die resultierende Mischung wird unter Rühren mit Lithiumhydroxid auf einen pH-Wert von 8,3 eingestellt, wobei die Farbsäure vollständig in Lösung geht. Zu dieser Lösung wird, wie in den Beispielen näher erläutert, ein Hilfsmittel gegeben. Man kann so die Wasserechtheit, die Markerechtheit, die Abriebechtheit sowie die Lichtechtheit verbessern, die Trockenzeit der Tinte nach dem Schreiben auf dem Papier verkürzen und die Migration des Farbstoffes ins Papier optimieren.

| Bsp. Nr. | Hilfsmittel ([Gew.-%, bezogen auf das Gewicht der Präparation]) | L* | ΔL* (nach Test auf Wasserechtheit |
|---|---|---|---|
| 9 | A (1) | 27,9 | 7,8 |
| 10 | B (1) | 26,6 | 10,4 |
| 11 | C (1) | 26,3 | 10,6 |
| 12 | D (1) | 26,4 | 8,4 |
| 13 | E (1) | 26,6 | 7,6 |
| 14 | F (1) | 40,0 | 3,4 |
| 15 | F (0,5) | 35,8 | 7,9 |
| 16 | F (0,3) | 30,3 | 17,5 |
| 17 | F (0,1) | 27,1 | 8,0 |

Folgende Hilfsmittel kamen zur Anwendung:
- Hilfsmittel A:: saurer Phosphorsäureester eines Fettalkoholalkoxylats
- Hilfsmittel B:: Mischung aus einer a-Alkylalkylcarbonsäure und einem Fettalkoholalkoxylat
- Hilfsmittel C:: oxethylierter Talkfettalkohol
- Hilfsmittel D:: Rizinusölethoxylat
- Hilfsmittel E:: Umsetzung von Ethylenoxid mit hydriertem Rizinusöl
- Hilfsmittel F:: Natriumsalz eines Fettsäurekondensationsproduktes

### Beispiel 18

37,3 g 4,4'-Diaminostilben-2,2'-disulfonsäure in Form des Dinatriumsalzes wurden in 550 ml Wasser gelöst, mit 13,8 g Natriumnitrit in Form einer 30 gew.-%igen wäßrigen Lösung versetzt und innerhalb von 30 Minuten in 61 g 30 gew.-%ige Salzsäure und 50 g Eis eingegossen. Die Temperatur stieg bis 8°C. Es wurde 5 Stunden nachgerührt, wobei die Temperatur allmählich bis 17°C anstieg. Man löste dann 47,8 g 1-Hydroxy-7-aminonaphthalin-3-sulfonsäure in 500 ml Wasser unter Zusatz von 8 g Natriumhydroxid und ließ dazu die Suspension der Bisdiazoverbindung laufen, wobei durch Zugabe von 40 g Natriumcarbonat in Form einer 20 gew.-%igen wäßrigen Lösung der pH-Wert ständig bei 10 und die Temperatur durch Eiszugabe bei 10°C gehalten wurden. Es wurde 1 Stunde nachgerührt und der ausgeschiedene Disazofarbstoff wurde abgesaugt, mit wenig Wasser gewaschen und getrocknet.

Dieser Farbstoff kann ebenfalls zur Herstellung einer Farbstoffpräparation verwendet werden, mit der ähnlich günstige Ergebnisse, wie oben beschrieben, erzielt werden.

### Beispiel 19

Dieses Beispiel veranschlaulicht die Herstellung einer lagerfähigen Lösung des Farbstoffs der Formel I.

74,1 g 4,4'-Diaminostilben-2,2'-disulfonsäure und 300 ml Wasser wurden bei Raumtemperatur verrührt und tropfenweise im Verlauf von etwa zwei Stunden mit 36 g 1,3-Bis(nitrosyloxy)-2,2-dimethylpropan versetzt. Nach dreistündigem Rühren zerstörte man den verbliebenen Nitritüberschuß mit geringen Zusätzen von Amidosulfonsäure. Die erhaltene Suspension ließ man sodann in eine aus 300 ml Wasser, 95,7 g 1-Hydroxy-7-aminonaphthalin-3-sulfonsäure und 182 g Triethanolamin bereitete Lösung bei 20 bis 30°C unter gutem Rühren innerhalb von 30 Minuten laufen. Mit 50 ml Wasser wurde das Diazotiergefäß nachgespült. Nach Auflösen von 125 g Harnstoff im Ansatz stellte man diesen mit einem weiteren geringen Wasserzusatz auf eine Gesamtmenge von 1250 g ein. Man erhielt so eine lagerfähige Lösung des Farbstoffs der Formel I.

## Patentansprüche

1. Verwendung von Farhstoffpräparationen, die 0,01 bis 10 Gew.-%, bezogen auf das Gewicht der Präparation, an Farbstoff, wobei 95 bis 100 Gew.-% der Farbstoffmenge aus dem Farbstoff der Formel I 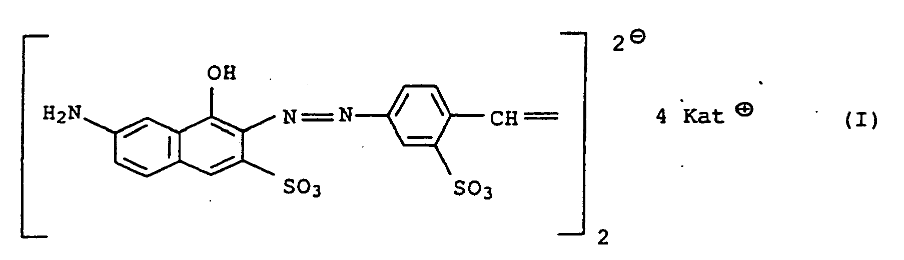 bestehen, in der Kat^{⊕} das Äquivalent eines Metall- oder Ammoniumions bedeutet, 0 bis 15 Gew.-%, bezogen auf das Gewicht der Präparation, eines oder mehrerer mit Wasser mischbarer organischer Lösungsmittel sowie 75 bis 99,99 Gew.-%, bezogen auf das Gewicht der Präparation, an Wasser enthalten und die im wesentlichen frei sind von Fremdsalzen, im Ink-Jet-Verfahren.

2. Verfahren zum Bedrucken eines Substrats mit einer Tinte unter Anwendung des Ink-Jet-Verfahrens, **dadurch gekennzeichnet, daß** man als Tinte eine Farbstoffpräparation gemäß Anspruch 1 verwendet.

## Claims

1. The use of dye preparations which comprise from 0.01 to 10% by weight, based on the weight of the preparation, of a dye quantity comprising from 95 to 100% by weight of the dye of the formula I 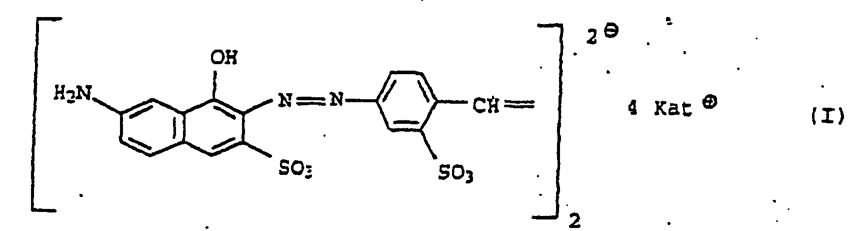 where Kat^{⊕} is the equivalent of a metal or ammonium ion, from 0 to 15% by weight, based on the weight of the preparation, of one or more water-miscible organic solvents, and from 75 to 99.99% by weight, based on the weight of the preparation, of water and which are essentially free of foreign salts, in the ink jet process.

2. A process for printing a substrate with an ink using the ink jet process, **characterized in that** a dye preparation according to claim 1 is used as ink.

## Revendications

1. Utilisation de préparations de colorants contenant 0,01 à 10 % en poids de colorants, par rapport au poids de la préparation, où 95 à 100 % en poids de la quantité de colorants est constituée du colorant de formule I 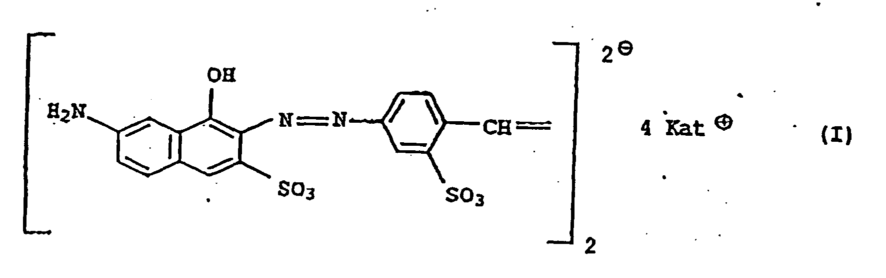 dans laquelle Kat^{⊕} représente l'équivalent d'un ion métallique ou ammonium, 0 à 15 % en poids, par rapport au poids de la préparation, d'un ou plusieurs solvants organiques miscibles à l'eau, ainsi que 75 à 99,99 % en poids d'eau, par rapport au poids de la préparation, et qui sont quasiment exemptes de sels étrangers, dans un procédé à jet d'encre.

2. Procédé d'impression d'un substrat avec une encre en utilisant le procédé à jet d'encre, **caractérisé en ce que** l'on utilise en tant qu'encre une préparation de colorants selon la revendication 1.
